# EUROPÄISCHE PATENTSCHRIFT

(11) **EP 2 710 275 B1**
(45) Veröffentlichungstag und Bekanntmachung des Hinweises auf die Patenterteilung: **25.07.2018**
(21) Anmeldenummer: 12727259.9
(22) Anmeldetag: 27.04.2012
(51) Int. Cl.: F16D 13/71

(54) **KUPPLUNGSDECKEL UND KUPPLUNGSVORRICHTUNG MIT KUPPLUNGSDECKEL**
CLUTCH COVER AND CLUTCH DEVICE WITH A CLUTCH COVER
COUVERCLE D'EMBRAYAGE ET SYSTÈME D'EMBRAYAGE POURVU D'UN COUVERCLE D'EMBRAYAGE

(30) Priorität: 16.05.2011 DE 102011101501; 03.08.2011 DE 102011080350; 03.08.2011 DE 102011080363
(43) Veröffentlichungstag der Anmeldung: 26.03.2014
(73) Patentinhaber: Schaeffler Technologies AG & Co. KG, 91074 Herzogenaurach (DE)
(72) Erfinder: KOTLJAROW, Valeri, 77743 Schutterzell (DE)
(86) Internationale Anmeldenummer: PCT/DE2012/000438
(87) Internationale Veröffentlichungsnummer: WO 2012/155876

(56) Entgegenhaltungen:
- WO-A1-2012/146224
- DE-A1-102004 012 954
- FR-A1- 2 844 317

## Beschreibung

Die vorliegende Erfindung betrifft einen Kupplungsdeckel für eine Kupplungsvorrichtung, insbesondere für einen Antriebsstrang eines Kraftfahrzeugs, sowie eine Kupplungsvorrichtung, insbesondere eine Reibungskupplung, mit einem Kupplungsdeckel.

Eine Kupplungsvorrichtung weist eine mit einem Kupplungsgehäuse, insbesondere einem Kupplungsdeckel, fest verbundene Gegendruckplatte und eine in axialer Richtung der Kupplungsvorrichtung begrenzt verlagerbare Anpressplatte zum reibschlüssigen Klemmen einer Kupplungsscheibe zwischen der Anpressplatte und der Gegendruckplatte auf. Der Kupplungsdeckel bedeckt die Anpressplatte und die Gegendruckplatte zumindest teilweise. Am Kupplungsdeckel können ein oder mehrere Hebelelemente kippbar bzw. umschnappbar gelagert sein, um die Anpressplatte auf die Gegendruckplatte zuzubewegen, das heißt die Kupplungsvorrichtung einzurücken, bzw. die Anpressplatte von der Gegendruckplatte weg zu bewegen, das heißt die Kupplungsvorrichtung auszurücken.

Gemäß einem als älteren, aber nicht als vorveröffentlicht angesehenen Stand der Technik weist ein Kupplungsdeckel mehrere zu einem Ring miteinander verbundene Deckelsegmente auf, die durch einen Haltering in Umfangsrichtung umgriffen sind. Bei der Befestigung des Halterings werden Befestigungsabschnitte der Deckelsegmente zuerst plastisch verformt, dann wird der Haltering aufgeschoben, und anschließend werden die Befestigungsabschnitte der Deckelsegmente wieder plastisch zurückgeformt.

Aus der älteren, aber nicht vorveröffentlichten WO 2012/146224 A1 ist ein Kupplungsdeckel mit mehreren Deckelsegmenten bekannt, dessen Haltering mit einer Vorspannung in radialer Richtung an den Deckelsegmenten anliegt.

Es ist Aufgabe der vorliegenden Erfindung, einen Kupplungsdeckel für eine Kupplungsvorrichtung sowie eine Kupplungsvorrichtung mit einem Kupplungsdeckel anzugeben, durch die eine Verringerung der Herstellungskosten möglich ist.

Erfindungsgemäß gelöst wird diese Aufgabe durch einen Kupplungsdeckel für eine Kupplungsvorrichtung gemäß Patentanspruch 1 mit mehreren zu einem Ring miteinander verbundenen Deckelsegmenten und einem Haltering, der die Deckelsegmente in Umfangsrichtung umgreift, wobei der Haltering an zumindest einem der Deckelsegmente eingeklipst ist. Insbesondere ist die Kupplungsvorrichtung für einen Antriebsstrang eines Kraftfahrzeugs ausgebildet. Durch das Einklipsen erfolgt die Verformung des jeweiligen Deckelsegments zur Befestigung des Halterings nur im elastischen Bereich des Deckelsegments, so dass auf Werkzeuge und Arbeitsschritte, die eine definierte plastische Verformung und eine definierte plastische Rückverformung zur Befestigung des Halterings ermöglichen, verzichtet werden kann, wodurch die Herstellungskosten verringert werden können.

Bevorzugte Ausführungsbeispiele der vorliegenden Erfindung sind in den abhängigen Ansprüchen dargelegt.

Da der Kupplungsdeckel nicht einstückig, sondern mehrstückig aus mehreren Deckelsegmenten zusammengesetzt ist, ist es möglich, den Kupplungsdeckel aus kostengünstigeren, kleineren Bauteilen aufzubauen, so dass eine Kupplungsvorrichtung mit einem derartigen Kupplungsdeckel kostengünstig hergestellt werden kann. Vorzugsweise sind die Deckelsegmente gleichartig, insbesondere identisch, ausgestaltet, so dass für den Kupplungsdeckel viele Gleichteile verwendet werden können. Besonders bevorzugt sind die Deckelsegmente aus einem Blech, insbesondere durch Stanzen und spanloses Umformen, herstellbar.

Durch den Haltering kann die Steifigkeit des durch die Deckelsegmente segmentierten Kupplungsdeckels erhöht werden. Insbesondere unter Fliehkrafteinfluss kann ein Aufweiten des segmentierten Kupplungsdeckels vermieden oder zumindest begrenzt werden. Die Berstfestigkeit des Kupplungsdeckels ist erhöht. Zudem ist eine erhöhte Formfestigkeit für den Kupplungsdeckel gegeben. Durch den Haltering kann für die Deckelsegmente eine vergleichsweise geringe Wandstärke vorgesehen sein, so dass die Materialkosten reduziert werden können.

Der Haltering kann insbesondere als ein geschlossener Drahtring ausgestaltet sein. Vorzugsweise ist der Haltering aus einem anderen Material als die Deckelsegmente hergestellt. Besonders bevorzugt weist der Haltering eine höhere Festigkeit als die Deckelsegmente auf. Der Haltering ist beispielsweise aus einem legierten und/oder gehärteten Stahl hergestellt. Der Haltering kann an den Deckelsegmenten zentriert sein.

Insbesondere weist zumindest ein Deckelsegment einen in radialer Richtung nach außen weisenden Nasenabschnitt zur radialen Anlage am Haltering auf. Der Haltering kann somit an definierten Stellen an den Deckelsegmenten anliegen. Insbesondere enden die Nasenabschnitte sämtlicher Deckelsegmente auf einem gemeinsamen Radius, so dass der Haltering zentriert an den Deckelsegmenten anliegen kann. Das jeweilige Deckelsegment kann einen einzigen Nasenabschnitt oder mehrere, beispielsweise zwei oder drei, Nasenabschnitte aufweisen.

Vorzugsweise weist das jeweilige Deckelsegment genau einen Naseabschnitt auf, der in Ümfangsrichtung, vorzugsweise im Wesentlichen mittig zum Deckelsegment, angeordnet ist.

Vorzugsweise weist zumindest eines der Deckelsegmente ein Führungselement zur axialen Führung einer in axialer Richtung verlagerbaren Anpressplatte auf. Die Anpressplatte kann somit axial beweglich durch den Kupplungsdeckel zentriert werden. Insbesondere kann das jeweilige Deckelsegment in axialer Richtung einen Anschlag für die Anpressplatte ausbilden, so dass beispielsweise die Anpressplatte zwischen dem Kupplungsdeckel und der Gegendruckplatte verliersicher aufgenommen ist.

Es ist möglich, dass die Deckelsegmente begrenzt gelenkig miteinander verbunden sind, wobei die Deckelsegmente insbesondere formschlüssig mit Spiel miteinander verbunden sind. Die begrenzte Bewegbarkeit der Deckelsegmente relativ zueinander erleichtert das Aufziehen des Halterings.

In einem bevorzugten Ausführungsbeispiel bilden zwei benachbarte, miteinander verbundene Deckelsegmente gemeinsam einen Befestigungstunnel zum Hindurchführen eines Befestigungsmittels, insbesondere einer Schraube, zur Verbindung des Kupplungsdeckels mit der Gegendruckplatte der Reibungskupplung aus. Durch den mit Hilfe der Deckelsegmente ausgebildeten Befestigungstunnel ist es möglich, durch nur ein Befestigungsmittel jeweils zwei Deckelsegmente mit der Gegendruckplatte zu verbinden. Hierzu ist es nicht erforderlich, zusätzlichen Bauraum in radialer Richtung des Kupplungsdeckels bzw. der Kupplungsvorrichtung vorzusehen. Die Befestigung des Kupplungsdeckels an der Gegendruckplatte kann im Wesentlichen ohne zusätzlichen Bauraumbedarf erfolgen. Insbesondere kann eine axiale Befestigungsrichtung vorgesehen sein, so dass das Befestigungsmittel einer Aufweitung des Kupplungsdeckels in radialer Richtung nach außen unter Fliehkrafteinfluss entgegenwirken kann. Der Kupplungsdeckel kann durch das Befestigungsmittel zusätzlich versteift werden, wodurch für die Deckelsegmente eine vergleichsweise geringe Wandstärke vorgesehen sein kann, so dass die Materialkosten reduziert werden können. Zudem kann die Berstfestigkeit des Kupplungsdeckels erhöht sein. Ferner kann für den Kupplungsdeckel eine erhöhte Formfestigkeit gegeben sein.

Der Befestigungstunnel kann im Vergleich zum übrigen Kupplungsdeckel eine geringere Erstreckung in axialer Richtung des Kupplungsdeckels bzw. der Kupplungsvorrichtung aufweisen, so dass das Befestigungsmittel, insbesondere der Schraubenkopf einer Schraube, nicht in axialer Richtung über den übrigen Kupplungsdeckel hinausragt. An der zur Gegendruckplatte weisenden Seite kann der Befestigungstunnel bündig mit den übrigen Bereichen der Deckelsegmente abschließen, so dass der Befestigungstunnel im montierten Zustand an der Gegendruckplatte insbesondere im Wesentlichen spaltlos anliegen kann. Der Befestigungstunnel kann mit dem verwendeten Befestigungsmittel eine Spielpassung oder eine Presspassung ausbilden. Beispielsweise kann im Befestigungstunnel ein in die Gegendruckplatte hineingepresster Passstift eingepasst sein, oder eine mit der Gegendruckplatte verschraubte Schraube mit Spiel durch den Befestigungstunnel geführt sein.

Insbesondere sind benachbarte Deckelsegmente durch gleichartig oder verschiedenartig ausgebildete Verbindungsabschnitte, vorzugsweise formschlüssig, miteinander verbunden. Die Deckelsegmente können insbesondere durch eine im Wesentlichen axiale Bewegung ineinander gesteckt werden und danach mit Hilfe des Befestigungsmittels und/oder mit Hilfe einer Verpressung, insbesondere einer Verstemmung, fixiert werden. Dies ergibt einen einfach und kostengünstig herzustellenden, segmentierten Kupplungsdeckel, der auch unter Fliehkrafteinfluss stabil und formbeständig ist.

Bei den beiden Verbindungsabschnitten zweier benachbarter Deckelsegmente handelt es sich vorzugsweise um zwei unterschiedliche, formschlüssig ineinandergreifende Verbindungsabschnitte. Vorzugsweise weist jeder der Verbindungsabschnitte zumindest einen, vorzugsweise zwei, im Wesentlichen U-förmigen Halteschlitz auf, wobei sich die U-förmige Halteschlitze der beiden ineinandergreifenden Verbindungsabschnitte in entgegengesetzte Richtungen öffnen, so dass sich die Verbindungsabschnitte an ihrer Verbindungsstelle/ihren beiden Verbindungsstellen im Wesentlichen kreuzförmig umgreifen können, und insbesondere vorzugsweise zwischen beiden Verbindungsstellen den Befestigungstunnel ausbilden können.

Gemäß einem bevorzugten Ausführungsbeispiel ist der Haltering an jedem der Deckelsegmente eingeklipst. Hierdurch ist es möglich, dass die miteinander verbundenen Deckelsegmente durch den Haltering gleichmäßig zentriert werden, und insbesondere jedes der Deckelsegmente verliersicher mit dem Haltering verbunden ist.

Gemäß einem weiteren bevorzugten Ausführungsbeispiel weist zumindest eines der Deckelsegmente, vorzugsweise jedes der Deckelsegmente, zumindest einen sich in axialer Richtung erstreckenden Axialabschnitt auf, der in radialer Richtung innerhalb des Halterings angeordnet ist, und mit dem sich der Haltering in Anlage befindet. Auch hierdurch ist eine zuverlässige Zentrierung der Deckelsegmente durch den Haltering möglich. Insbesondere ist es von Vorteil, wenn der Axialabschnitt den zuvor erwähnten, in radialer Richtung nach außen weisenden Naseabschnitt bzw. einen Teilbereich dieses Nasenabschnitts beinhaltet, um die Anlagefläche des Halterings zu vergrößern.

Zumindest eines der Deckelsegmente, vorzugsweise jedes der Deckelsegmente, weist zumindest eine Sicherungszunge auf, in die der Haltering eingeklipst ist. Vorzugsweise ist diese Sicherungszunge aus dem gleichen Material ausgebildet wie das jeweilige Deckelsegment. Insbesondere ist es von Vorteil, wenn die Sicherungszunge einteilig mit dem jeweiligen Deckelsegment ausgebildet ist. Durch das Aufschieben des Halterings auf die Deckelsegmente ist die Sicherungszunge in ihrem elastischen Bereich verformbar, wird bei korrekter Montage jedoch nicht plastisch verformt. Wenn der Haltering sich in seiner endgültigen Lage befindet und die Deckelsegmente in Umfangsrichtung umgreift, ist zumindest ein Teil der elastischen Verformung, die die Sicherungszunge während des Aufschiebens des Halterings erfahren hat, rückgängig gemacht worden.

Die Sicherungszunge erstreckt sich in axialer Richtung und umgreift den Haltering teilweise. Vorzugsweise erfolgt das teilweise Umgreifen des Halterings unter Vorspannung, so dass die elastische Verformung, die die Sicherungszunge beim Aufschieben des Halterings auf die Deckelsegmente erfahren hat, und teilweise rückgängig gemacht wird, wenn der Haltering seine endgültige Position einnimmt, in der er die Deckelsegmente in Umfangsrichtung umgreift. Durch das Einklipsen des Halterings an der Sicherungszunge der Deckelsegmente bzw. an den Sicherungszungen der Deckelsegmente erfolgt vorzugsweise zumindest eine kraftschlüssige, das heißt federklemmende Verbindung, die zusätzlich jedoch auch formschlüssige Bestandteile aufweisen kann, beispielsweise indem die Kontur der Sicherungszunge im Wesentlichen der Oberfläche des Halterings angeglichen ist.

Vorzugsweise umgreift die Sicherungszunge einen in radialer Richtung innen liegenden Oberflächenabschnitt des Halterings oder einen in radialer Richtung außen liegenden Oberflächenabschnitt des Halterings in einem Winkelbereich größer 90°. Von Vorteil ist es, wenn der Winkelbereich zwischen 120° und 180° liegt, während es insbesondere von Vorteil ist, wenn der Winkelbereich zwischen 120° und 150° liegt. Hierdurch ist ein zuverlässiger Kraftschluss zwischen der Sicherungszunge des Deckelsegments und dem Haltering möglich, gegebenenfalls mit formschlüssigen Anteilen.

Gemäß einem weiteren bevorzugten Ausführungsbeispiel weisen die Deckelsegmente zwei Gruppen von Sicherungszungen auf, von denen die erste Gruppe von Sicherungszungen in radialer Richtung innerhalb des Halterings angeordnet ist und die zweite Gruppe von Sicherungszungen in radialer Richtung außerhalb des Halterings angeordnet ist. Hierdurch ist es möglich, dass durch die Sicherungszungen sowohl ein radial innen liegender Oberflächenabschnitt des Halterings als auch ein radial außen liegender Oberflächenabschnitt des Halterings umgriffen wird, wodurch der Haltering zuverlässig auf den Deckelsegmenten gehalten wird.

Besonders von Vorteil ist es, wenn zumindest eines der Deckelsegmente, vorzugsweise jedes der Deckelsegmente, zumindest eine Sicherungszunge der ersten Gruppe und zumindest eine Sicherungszunge der zweiten Gruppe aufweist. Hierdurch kann ein Verschieben der einzelnen Deckelsegmente relativ zueinander verhindert werden, auch wenn die einzelnen Deckelsegmente begrenzt gelenkig miteinander verbunden sind, und der Kupplungsdeckel noch nicht mit der Gegendruckplatte der Kupplungsvorrichtung verbunden ist.

Vorzugsweise ist der Axialabschnitt eines Deckelsegments in Umfangsrichtung zwischen zwei, vorzugsweise zu demselben Deckelsegment gehörigen, Sicherungszungen angeordnet. Insbesondere ist es von Vorteil, wenn der Axialabschnitt des Deckelsegments zwischen einer Sicherungszunge der ersten Gruppe und einer Sicherungszunge der zweiten Gruppe angeordnet ist. Hierdurch ist eine zuverlässige Zentrierung der einzelnen Deckelsegmente durch den Axialabschnitt und eine zuverlässige Befestigung des Halterings an den einzelnen Deckelsegmenten möglich.

Die vorgenannte Aufgabe wird ferner erfindungsgemäß gelöst durch eine Kupplungsvorrichtung gemäß Patentanspruch 10 mit einer Gegendruckplatte, einer in axialer Richtung begrenzt verlagerbaren Anpressplatte zur reibschlüssigen Klemmung einer Kupplungsscheibe zwischen der Anpressplatte und der Gegendruckplatte und einem mittelbar oder unmittelbar mit der Gegendruckplatte verbundenen Kupplungsdeckel nach zumindest einem der vorangegangenen Ausführungsbeispiele. Insbesondere handelt es sich bei der Kupplungsvorrichtung um eine Reibungskupplung. Weiterhin ist die Kupplungsvorrichtung insbesondere für einen Antriebsstrang eines Kraftfahrzeugs ausgebildet. Dadurch dass der Haltering an zumindest einem der Deckelsegmente des Kupplungsdeckels eingeklipst ist, lassen sich die Herstellungskosten der gesamten Kupplüngsvorrichtung verringern.

Die vorliegende Erfindung wird nachfolgend anhand von bevorzugten Ausführungsbeispielen in Verbindung mit den zugehörigen Figuren näher erläutert. In diesen zeigen:
- Figur 1: ein Ausführungsbeispiel einer Kupplungsvorrichtung mit einem segmentierten Kupplungsdeckel, der in Umfangsrichtung von einem Haltering umgriffen ist,
- Figur 2: eine Darstellung des Kupplungsdeckels aus Figur 1 mit mehreren Deckelsegmenten,
- Figur 3: ein einzelnes Deckelsegment aus Figur 2, und
- Figur 4: eine detailliertere Darstellung des Kupplungsdeckels aus Figur 2.

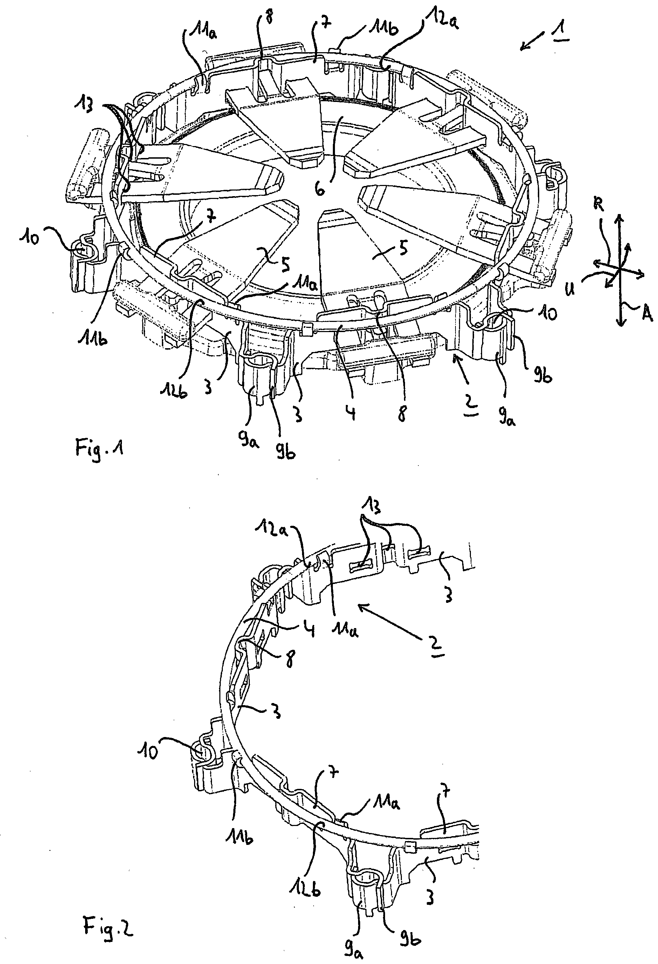

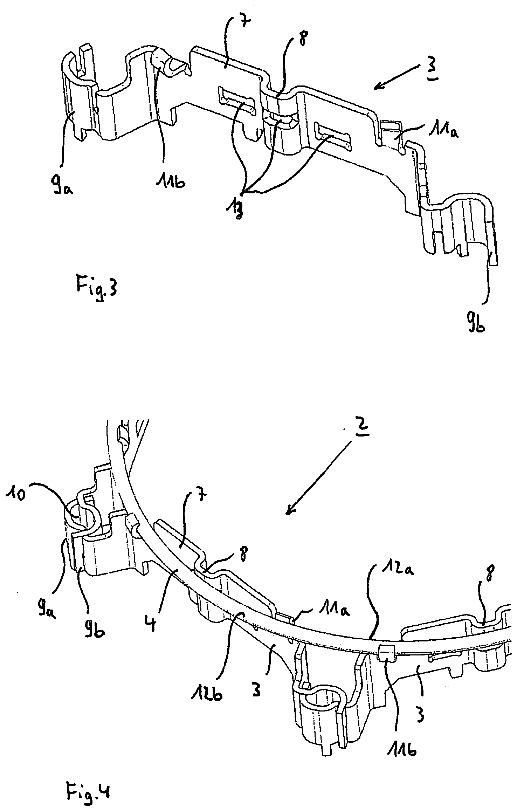

Die Figuren 1 bis 4 betreffen ein bevorzugtes Ausführungsbeispiel einer Kupplungsvorrichtung 1 bzw. eines Kupplungsdeckels 2 für eine Kupplungsvorrichtung 1. Merkmale, die in der vorliegenden Beschreibung nicht als erfindungswesentlich gekennzeichnet sind, sind als optional zu verstehen. Daher betrifft die nachfolgende Beschreibung auch weitere Ausführungsbeispiele der Kupplungsvorrichtung 1 bzw. des Kupplungsdeckels 2, die Teilkombinationen der im Folgenden zu erläuternden Merkmale aufweisen. Die Kupplungsvorrichtung 1 ist insbesondere als Reibungskupplung ausgebildet und für den Antriebsstrang eines Kraftfahrzeugs vorgesehen.

Die Kupplungsvorrichtung 1 weist zumindest eine Anpressplatte 6, zumindest eine nicht dargestellte Gegendruckplatte und zumindest eine in axialer Richtung A zwischen der Anpressplatte 6 und der Gegendruckplatte angeordnete, nicht dargestellte Kupplungsscheibe auf. Die Gegendruckplatte ist mit einem oder mehreren Gehäusebauteilen, insbesondere dem Kupplungsdeckel 2, fest verbunden, insbesondere verschraubt. Die Anpressplatte 6 ist im Gehäuse drehfest gelagert und in axialer Richtung A der Kupplungsvorrichtung 1 bzw. des Kupplungsdeckels 2 begrenzt verlagerbar. Insbesondere ist die Anpressplatte 6 mittels mehrerer nicht dargestellter Blattfedern drehfest im Gehäuse befestigt und von der Gegendruckplatte weg, das heißt mit Bezug auf Figur 1 nach oben, vorgespannt.

Darüber hinaus weist die Kupplungsvorrichtung 1 mehrere Hebelelemente 5 auf, die gehäuseseitig, insbesondere am Kupplungsdeckel 2 abgestützt und gelagert sind, und die durch eine nicht dargestellte Aktoreinrichtung betätigbar sind. Die einzelnen Hebelelemente 5 erstrecken sich in radialer Richtung R der Kupplungsvorrichtung 1, vorzugsweise durch den Kupplungsdeckel 2 hindurch, wofür einzelne Deckelsegmente 3 des Kupplungsdeckels 2 in radialer Richtung R Durchbrechungen 13 aufweisen.

Obwohl dies nicht dargestellt ist, ist es auch möglich, dass die Kupplungsvorrichtung 1 nur ein einziges Hebelelement 5 aufweist. Insbesondere kann das Hebelelement 5 als Tellerfeder für eine normal-eingerückte Kupplungsvorrichtung oder als Hebelfeder für eine normal-ausgerückte Kupplungsvorrichtung ausgebildet sein.

Bei einer normal-eingerückten Kupplungsvorrichtung 1, wie sie in Figur 1 dargestellt ist, überwiegt die wirksame Kraft der Hebelelemente 5 die Gegenkraft der Blattfedern, während bei einer normal-ausgerückten Kupplungsvorrichtung 1 die Gegenkraft der Blattfedern die wirksame Kraft der Hebelelemente 5 überwiegt. Dementsprechend führt eine Betätigung der Hebelelemente 5 einer normal-eingerückten Kupplungsvorrichtung 1 durch eine Aktoreinrichtung zum Ausrücken der Kupplungsvorrichtung 1, das heißt zum Abhub der Anpressplatte 6 von der Gegendruckplatte, während eine Betätigung der Hebelelemente 5 einer normal-ausgerückten Kupplungsvorrichtung 1 durch eine Aktoreinrichtung zum Einrücken der Kupplungsvorrichtung 1 führt.

Bei ausgerückter Kupplung ist die Kupplungsscheibe um eine Zentralachse relativ zum Kupplungsgehäuse bzw. zur Anpressplatte 6 und zur Gegendruckplatte, die beide mit dem Gehäuse drehfest verbunden sind, verdrehbar. Bei eingerückter Kupplung wird ein Drehmoment von der Eingangsseite der Kupplungsvorrichtung 1, beispielsweise von einem Verbrennungsmotor eines Kraftfahrzeugs oder von einem durch den Verbrennungsmotor angetriebenen Zweimassenschwungrad über das Gehäuse und sowohl die Gegendruckplatte als auch die Anpressplatte 6 reibschlüssig auf die Kupplungsscheibe übertragen. Von der Kupplungsscheibe, die reibschlüssig zwischen der Gegendruckplatte und der Anpressplatte 6 geklemmt ist, wird das Drehmoment zur Ausgangsseite der Kupplungsvorrichtung 1 übertragen, beispielsweise auf die Eingangswelle eines Getriebes.

Der Kupplungsdeckel 2 ist nicht als einteiliges Guss- oder Stanzbauteil ausgebildet, sondern weist mehrere Deckelsegmente 3 auf, die durch Verbindungsabschnitte 9a, 9b miteinander zu einem Ring verbunden sind. Wie dies bereits in der Beschreibungseinleitung erläutert worden ist, sind zwei benachbarte Deckelsegmente 3 durch ihre aneinander grenzenden Verbindungsabschnitte 9a, 9b vorzugsweise formschlüssig miteinander verbunden, wobei jeder der Verbindungsabschnitte 9a, 9b zumindest einen, vorzugsweise zwei, im Wesentlichen U-förmigen Halteschlitz aufweist. Die U-förmigen Halteschlitze der beiden in Eingriff befindlichen Verbindungsabschnitte 9a, 9b sind einander entgegengesetzt geöffnet, so dass sich die Verbindungsabschnitte 9a, 9b an ihrer Verbindungsstelle/ihren beiden Verbindungsstellen im Wesentlichen kreuzförmig umgreifen können, und insbesondere vorzugsweise zwischen beiden Verbindungsstellen einen Befestigungstunnel 10 ausbilden.

Die Verbindungsabschnitte 9a, 9b können zusätzlich miteinander verpresst, insbesondere verstemmt, sein, können jedoch auch nur gelenkig bzw. lose gesteckt miteinander verbunden sein. Auch kann die formschlüssige Verbindung der Verbindungsabschnitte 9a, 9b beispielsweise auch durch eine Schraube gesichert sein, die sich durch den Befestigungstunnel 10 in axialer Richtung A der Kupplungsvorrichtung 1 erstreckt und gleichzeitig den Kupplungsdeckel 2 mit der Gegendruckplatte der Kupplungsvorrichtung 1 verbindet.

Neben den Deckelsegmenten 3 weist der Kupplungsdeckel 2 einen Haltering 4 auf. Der Haltering 4 umgreift die Deckelsegmente 3 in Umfangsrichtung U. Der Haltering 4 ist insbesondere als geschlossener Drahtring ausgebildet. Vorzugsweise weist der Haltering 4 eine höhere Festigkeit als die Deckelsegmente 3 auf. Zum einen wird durch den Haltering 4 die Steifigkeit der Deckelsegmente 3 erhöht, wenn der Kupplungsdeckel 2 noch nicht mit der Gegendruckplatte der Kupplungsvorrichtung 1 verbunden ist. Zum anderen wird durch den Haltering 4 ein Aufweiten der Deckelsegmente 3 in der Kupplungsvorrichtung 1 unter Fliehkrafteinfluss vermieden oder zumindest begrenzt. Hierdurch wird auch die Berstfestigkeit des Kupplungsdeckels 2 erhöht.

Im dargestellten Ausführungsbeispiel weist jedes der Deckelsegmente 3 einen in radialer Richtung R nach außen weisenden Nasenabschnitt 8 zur radialen Anlage am Haltering 4 auf. Insbesondere enden die Nasenabschnitte 8 sämtlicher Deckelsegmente 3 auf einem gemeinsamen Radius, so dass der Haltering 4 zentriert an den Deckelsegmenten 3 anliegen kann. Vorzugsweise weist das jeweilige Deckelsegment 3 genau einen Nasenabschnitt 8 auf, der in Umfangsrichtung U, vorzugsweise im Wesentlichen mittig zum Deckelsegment 3, angeordnet ist. Jedoch kann das jeweilige Deckelsegment 3 auch mehr als einen Nasenabschnitt 8, beispielsweise zwei oder drei Nasenabschnitte 8, aufweisen.

Jedes der Deckelsegmente weist ferner einen sich in axialer Richtung R erstreckenden Axialabschnitt 7 auf, der in radialer Richtung R innerhalb des Halterings 4 angeordnet ist, und mit dem sich der Haltering 4 in Anlage befindet. Insbesondere befindet sich der Haltering 4 mit den in Umfangsrichtung U gegenüberliegenden Kanten des Axialabschnitts 7 in Anlage. Der Nasenabschnitt 8 ist vorzugsweise Teil des Axialabschnitts 7 und springt von diesem in radialer Richtung R der Kupplungsvorrichtung 1 nach außen vor, um den Anlagebereich des Halterings 4 am jeweiligen Deckelsegment 3 zu vergrößern.

Der Haltering 4 ist an zumindest einem der Deckelsegmente 3, vorzugsweise an jedem der Deckelsegmente 3, eingeklipst. Hierzu weist das jeweilige Deckelsegment 3 jeweils zumindest eine Sicherungszunge 11a, 11b auf, in die der Haltering 4 eingeklipst ist. Die Sicherungszungen 11a, 11b sind federelastisch ausgebildet und vorzugsweise einteilig mit dem jeweiligen Deckelsegment 3 ausgebildet. Die Sicherungszungen 11a, 11b erstrecken sich in axialer Richtung A der Kupplungsvorrichtung 1 bzw. des Kupplungsdeckels 2 und sind insbesondere auf der der Gegendruckplatte abgewandten Seite des Kupplungsdeckels 2 an den einzelnen Deckelsegmenten 3 ausgebildet. Die Sicherungszungen 11a, 11b umgreifen den Haltering 4 teilweise, vorzugsweise unter Vorspannung, das heißt sind noch elastisch verformt, wenn der Haltering 4 an den Deckelsegmenten 3 bereits seine endgültige Position eingenommen hat, das heißt eingeklipst ist.

Die jeweilige Sicherungszunge 11a, 11b eines Deckelsegments 3 umgreift einen in radialer Richtung R innen liegenden Oberflächenabschnitt 12a des Halterings 4 oder einen in radialer Richtung R außen liegenden Oberflächenabschnitt 12b des Halterings 4 vorzugsweise in einem Winkelbereich größer 90°. Der Winkelbereich liegt vorzugsweise zwischen 120° und 180°, und insbesondere vorzugsweise zwischen 120° und 150°. Somit wird zum einen gewährleistet, dass der Haltering 4 auf einfache Art und Weise in axialer Richtung A auf die miteinander ringförmig verbundenen Deckelsegmente 3 aufgeschoben werden kann, und zum anderen, wenn er seine endgültige Position eingenommen hat, durch die Sicherungszungen 11a, 11b verliersicher gehalten werden kann.

Vorzugsweise weisen die Deckelsegmente 3 zwei Gruppen von Sicherungszungen 11a, 11b auf. Die erste Gruppe von Sicherungszungen 11a ist in radialer Richtung R innerhalb des Halterings 4 angeordnet. Sicherungszungen 11a der ersten Gruppe umgreifen vorzugsweise den in radialer Richtung R innen liegenden Oberflächenabschnitt 12a des Halterings 4 teilweise. Die zweite Gruppe von Sicherungszungen 11b ist in radialer Richtung R außerhalb des Halterings 4 angeordnet. Sicherungszungen 11b der zweiten Gruppe umgreifen vorzugsweise den in radialer Richtung R außen liegenden Oberflächenabschnitt 12b des Halterings 4 teilweise.

Im dargestellten Ausführungsbeispiel weist jedes der Deckelsegmente 3 eine Sicherungszunge 11a der ersten Gruppe und eine Sicherungszunge 11b der zweiten Gruppe auf. Es ist jedoch auch möglich, dass jedes der Deckelsegmente 3 mehr als eine Sicherungszunge 11a der ersten Gruppe und mehr als eine Sicherungszunge 11b der zweiten Gruppe aufweist. Ebenso ist es möglich, dass ein einzelnes Deckelsegment 3 beispielsweise nur eine oder mehrere Sicherungszungen 11a der ersten Gruppe aufweist, während ein in Umfangsrichtung folgendes Deckelsegment 3 nur eine oder mehrere Sicherungszungen 11b der zweiten Gruppe aufweist.

Von Vorteil ist es, wenn der Axialabschnitt 7 des Deckelsegments 3, und vorzugsweise auch der Nasenabschnitt 8 des Deckelsegmentes 3, in Umfangsrichtung U zwischen zwei zu demselben Deckelsegment 3 gehörigen Sicherungszungen 11a, 11b angeordnet ist. Vorzugsweise ist der Axialabschnitt 7 und gegebenenfalls auch der Nasenabschnitt 8 in Umfangsrichtung U zwischen einer Sicherungszunge 11a der ersten Gruppe und einer Sicherungszunge 11b der zweiten Gruppe angeordnet.

Im dargestellten Ausführungsbeispiel erstrecken sich die Hebelelemente 5 in radialer Richtung R durch die Durchbrechungen 13, die in den jeweiligen Deckelsegmenten 3, vorzugsweise in jedem der die Ringform bildenden Deckelsegmente 3, vorgesehen sind. In radialer Richtung R innerhalb des Halterings 4 sind die Hebelelemente 5 durch die nicht dargestellte Aktoreinrichtung in axialer Richtung A betätigbar, das heißt zur Gegendruckplatte hin drückbar oder von der Gegendruckplatte weg ziehbar. In radialer Richtung R außerhalb des Halterings 4 wirken die Hebelelemente 5 auf die in Axialrichtung A begrenzt verlagerbare Anpressplatte 6. Vorzugsweise wird die Axialbewegung der Anpressplatte 6 durch einen deckelsegmentseitigen Anschlag begrenzt, der die Anpressplatte 6 verliersicher zwischen der Gegendruckplatte und dem Kupplungsdeckel 2 hält.

In den Durchbrechungen 13 sind die Hebelelemente 5 kippbar bzw. umschnappbar angeordnet. Hierzu sind die Durchbrechungen 13 vorzugsweise in axialer Richtung A zwischen dem Haltering 4 und der Gegendruckplatte bzw. der gegendruckplattenseitigen Kante der Deckelsegmente 3 angeordnet. In Umfangsrichtung U sind die Durchbrechungen 13 zwischen den beiden Sicherungszungen 11a, 11b des jeweiligen Deckelsegments angeordnet. Pro Hebelelement 5 weist das Deckelsegment 3 im dargestellten Ausführungsbeispiel drei Durchbrechungen 13 auf, kann jedoch auch zwei, eine oder mehr als drei Durchbrechungen 13 pro Hebelelement 5 aufweisen.

Die vorangegangenen Ausführungsbeispiele betreffen einen Kupplungsdeckel 2 für eine Kupplungsvorrichtung 1, insbesondere für einen Antriebsstrang eines Kraftfahrzeugs, mit mehreren zu einem Ring miteinander verbundenen Deckelsegmenten 3 und einem Haltering 4, der die Deckelsegmente 3 in Umfangsrichtung U umgreift, wobei der Haltering 4 an zumindest einem der Deckelsegmente 3 eingeklipst ist.

Darüber hinaus betreffen die vorangegangenen Ausführungsbeispiele eine Kupplungsvorrichtung 1, insbesondere eine Reibungskupplung, insbesondere für einen Antriebsstrang eines Kraftfahrzeugs, mit einer Gegendruckplatte, einer in axialer Richtung A begrenzt verlagerbaren Anpressplatte 6 zur reibschlüssigen Klemmung der Kupplungsscheibe zwischen der Anpressplatte 6 und der Gegendruckplatte und einem mittelbar oder unmittelbar mit der Gegen- , druckplatte verbundenen Kupplungsdeckel 2 nach zumindest einem der vorangegangenen Ausführungsbeispiele.

### Bezugszeichenliste

- 1: Kupplungsvorrichtung
- 2: Kupplungsdeckel
- 3: Deckelsegment
- 4: Haltering
- 5: Hebelelement
- 6: Anpressplatte
- 7: Axialabschnitt
- 8: Nasenabschnitt
- 9a: Verbindungsabschnitt
- 9b: Verbindungsabschnitt
- 10: Befestigungstunnel
- 11a: Sicherungszunge
- 11b: Sicherungszunge
- 12a: innen liegender Oberflächenabschnitt
- 12b: außen liegender Oberflächenabschnitt
- 13: Durchbrechung
- A: axiale Richtung
- R: radiale Richtung
- U: Umfangsrichtung

## Patentansprüche

1. Kupplungsdeckel (2) für eine Kupplungsvorrichtung (1), insbesondere für einen Antriebsstrang eines Kraftfahrzeugs, mit mehreren zu einem Ring miteinander verbundenen Deckelsegmenten (3) und einem Haltering (4), der die Deckelsegmente (3) in Umfangsrichtung (U) umgreift, wobei der Haltering (4) an zumindest einem der Deckelsegmente (3) eingeklipst ist, wobei zumindest eines der Deckelsegmente (3) zumindest eine Sicherungszunge (11a, 11b) aufweist, in die der Haltering (4) eingeklipst ist, und die sich in axialer Richtung (A) erstreckt und den Haltering (4) teilweise umgreift.

2. Kupplungsdeckel (2) nach Anspruch 1, wobei der Haltering (4) an jedem der Deckelsegmente (3) eingeklipst ist.

3. Kupplungsdeckel (2) nach Anspruch 1 oder 2, wobei zumindest eines der Deckelsegmente (3), vorzugsweise jedes der Deckelsegmente (3), zumindest einen sich in axialer Richtung (A) erstreckenden Axialabschnitt (7) aufweist, der in radialer Richtung (R) innerhalb des Halterings (4) angeordnet ist, und mit dem sich der Haltering (4) in Anlage befindet.

4. Kupplungsdeckel (2) nach zumindest einem der Ansprüche 1 bis 3, wobei jedes der Deckelsegmente (3) zumindest eine Sicherungszunge (11a, 11b) aufweist, in die der Haltering (4) eingeklipst ist.

5. Kupplungsdeckel (2) nach zumindest einem der Ansprüche 1 bis 4, wobei die Sicherungszunge (11a, 11b) den Haltering (4) unter Vorspannung umgreift.

6. Kupplungsdeckel (2) nach zumindest einem der Ansprüche 1 bis 5, wobei die Sicherungszunge (11a, 11b) einen in radialer Richtung (R) innen liegenden Oberflächenabschnitt (12a) des Halterings (4) oder einen in radialer Richtung (R) außen liegenden Oberflächenabschnitt (12b) des Halterings (4) in einem Winkelbereich größer 90°, vorzugsweise zwischen 120° und 180°, insbesondere vorzugsweise zwischen 120° und 150°, umgreift.

7. Kupplungsdeckel (2) nach zumindest einem der Ansprüche 1 bis 6, wobei die Deckelsegmente (3) zwei Gruppen von Sicherungszungen (11a, 11b) aufweisen, von denen die erste Gruppe von Sicherungszungen (11a) in radialer Richtung (R) innerhalb des Halterings (4) angeordnet ist und die zweite Gruppe von Sicherungszungen (11b) in radialer Richtung (R) außerhalb des Halterings (4) angeordnet ist.

8. Kupplungsdeckel (2) nach Anspruch 7, wobei zumindest eines der Deckelsegmente (3), vorzugsweise jedes der Deckelsegmente (3), zumindest eine Sicherungszunge (11a) der ersten Gruppe und zumindest eine Sicherungszunge (11b) der zweiten Gruppe aufweist.

9. Kupplungsdeckel (2) nach zumindest eine der Ansprüche 1 bis 8, wobei der Axialabschnitt (7) eines Deckelsegments (3) in Umfangsrichtung (U) zwischen zwei, vorzugsweise zu demselben Deckelsegment (3) gehörigen, Sicherungszungen (11a, 11b), vorzugsweise zwischen einer Sicherungszunge (11a) der ersten Gruppe und einer Sicherungszunge (11b) der zweiten Gruppe, angeordnet ist.

10. Kupplungsvorrichtung (1), insbesondere Reibungskupplung, insbesondere für einen Antriebsstrang eines Kraftfahrzeugs, mit einer Gegendruckplatte, einer in axialer Richtung (A) begrenzt verlagerbaren Anpressplatte (6) zur reibschlüssigen Klemmung einer Kupplungsscheibe zwischen der Anpressplatte (6) und der Gegendruckplatte und einem mittelbar oder unmittelbar mit der Gegendruckplatte verbundenen Kupplungsdeckel (2) nach zumindest einem der Ansprüche 1 bis 9.

## Claims

1. Clutch cover (2) for a clutch apparatus (1), in particular for a drive train of a motor vehicle, having a plurality of cover segments (3) which are connected to one another to form a ring, and having a holding ring (4) which engages over the cover segments (3) in the circumferential direction (U), the holding ring (4) being clipped on at least one of the cover segments (3), at least one of the cover segments (3) having at least one securing tongue (11a, 11b), into which the holding ring (4) is clipped and which extends in the axial direction (A) and engages around the holding ring (4) partially.

2. Clutch cover (2) according to Claim 1, the holding ring (4) being clipped on each of the cover segments (3) .

3. Clutch cover (2) according to Claim 1 or 2, at least one of the cover segments (3), preferably each of the cover segments (3), having at least one axial section (7) which extends in the axial direction (A), is arranged within the holding ring (4) in the radial direction (R), and with which the holding ring (4) is in bearing contact.

4. Clutch cover (2) according to at least one of Claims 1 to 3, each of the cover segments (3) having at least one securing tongue (11a, 11b), into which the holding ring (4) is clipped.

5. Clutch cover (2) according to at least one of Claims 1 to 4, the securing tongue (11a, 11b) engaging around the holding ring (4) under prestress.

6. Clutch cover (2) according to at least one of Claims 1 to 5, the securing tongue (11a, 11b) engaging around a surface section (12a) of the holding ring (4), which surface section (12a) lies on the inside in the radial direction (R), or a surface section (12b) of the holding ring (4), which surface section (12b) lies on the outside in the radial direction (R), in an angular region of greater than 90°, preferably between 120° and 180°, in particular preferably between 120° and 150°.

7. Clutch cover (2) according to at least one of Claims 1 to 6, the cover segments (3) having two groups of securing tongues (11a, 11b), of which the first group of securing tongues (11a) is arranged within the holding ring (4) in the radial direction (R), and the second group of securing tongues (11b) is arranged outside the holding ring (4) in the radial direction (R) .

8. Clutch cover (2) according to Claim 7, at least one of the cover segments (3), preferably each of the cover segments (3), having at least one securing tongue (11a) of the first group and at least one securing tongue (11b) of the second group.

9. Clutch cover (2) according to at least one of Claims 1 to 8, the axial section (7) of a cover segment (3) being arranged in the circumferential direction (U) between two securing tongues (11a, 11b) which preferably belong to the same cover segment (3), preferably between a securing tongue (11a) of the first group and a securing tongue (11b) of the second group.

10. Clutch apparatus (1), in particular friction clutch, in particular for a drive train of a motor vehicle, having a counterpressure plate, a pressure plate (6) which can be moved to a limited extent in the axial direction (A) for clamping a clutch disc in a frictionally locking manner between the pressure plate (6) and the counterpressure plate, and a clutch cover (2) according to at least one of Claims 1 to 9 which is connected indirectly or directly to the counterpressure plate.

## Revendications

1. Couvercle d'embrayage (2) pour un système d'embrayage (1), en particulier pour une chaîne cinématique d'un véhicule à moteur, avec plusieurs segments de couvercle (3) assemblés l'un à l'autre en un anneau et avec un anneau de maintien (4), qui encercle les segments de couvercle (3) en direction périphérique (U), dans lequel l'anneau de maintien (4) est encliqueté sur au moins un des segments de couvercle (3), dans lequel au moins un des segments de couvercle (3) présente au moins une languette de fixation (11a, 11b), dans laquelle l'anneau de maintien (4) est encliqueté, et qui s'étend en direction axiale (A) et entoure partiellement l'anneau de maintien (4).

2. Couvercle d'embrayage (2) selon la revendication 1, dans lequel l'anneau de maintien (4) est encliqueté sur chacun des segments de couvercle (3).

3. Couvercle d'embrayage (2) selon la revendication 1 ou 2, dans lequel au moins un des segments de couvercle (3), de préférence chacun des segments de couvercle (3), présente au moins une partie axiale (7) s'étendant en direction axiale (A), qui est disposé en direction radiale (R) à l'intérieur de l'anneau de maintien (4), et avec laquelle l'anneau de maintien (4) se trouve en appui.

4. Couvercle d'embrayage (2) selon au moins une des revendications 1 à 3, dans lequel chacun des segments de couvercle (3) présente au moins une languette de fixation (11a, 11b), dans laquelle l'anneau de maintien (4) est encliqueté.

5. Couvercle d'embrayage (2) selon au moins une des revendications 1 à 4, dans lequel la languette de fixation (11a, 11b) entoure l'anneau de maintien (4) sous précontrainte.

6. Couvercle d'embrayage (2) selon au moins une des revendications 1 à 5, dans lequel la languette de fixation (11a, 11b) entoure une partie de surface (12a) de l'anneau de maintien (4) située intérieurement en direction radiale (R) ou une partie de surface (12b) de l'anneau de maintien (4) située extérieurement en direction radiale (R) dans une zone angulaire supérieure à 90°, de préférence comprise entre 120° et 180°, en particulier de préférence comprise entre 120° et 150°.

7. Couvercle d'embrayage (2) selon au moins une des revendications 1 à 6, dans lequel les segments de couvercle (3) présentent deux groupes de languettes de fixation (11a, 11b), parmi lesquels le premier groupe de languettes de fixation (11a) est disposé en direction radiale (R) à l'intérieur de l'anneau de maintien (4) et le deuxième groupe de languettes de fixation (11b) est disposé en direction radiale (R) à l'extérieur de l'anneau de maintien (4).

8. Couvercle d'embrayage (2) selon la revendication 7, dans lequel au moins un des segments de couvercle (3), de préférence chacun des segments de couvercle (3), présente au moins une languette de fixation (11a) du premier groupe et au moins une languette de fixation (11b) du deuxième groupe.

9. Couvercle d'embrayage (2) selon au moins une des revendications 1 à 8, dans lequel la partie axiale (7) d'un segment de couvercle (3) est disposée en direction périphérique (U) entre deux languettes de fixation (11a, 11b) appartenant de préférence au même segment de couvercle (3), de préférence entre une languette de fixation (11a) du premier groupe et une languette de fixation (11b) du deuxième groupe.

10. Système d'embrayage (1), en particulier embrayage à friction, en particulier pour une chaîne cinématique d'un véhicule à moteur, avec un plateau de contrepression, un plateau de pression (6) déplaçable de façon limitée en direction axiale (A) pour le serrage par friction d'un disque d'embrayage entre le plateau de pression (6) et le plateau de contrepression et avec un couvercle d'embrayage (2) selon l'une quelconque des revendications 1 à 9 assemblé indirectement ou directement au plateau de contrepression.
